# EUROPEAN PATENT SPECIFICATION

(11) **EP 1 910 452 B1**
(45) Date of publication and mention of the grant of the patent: **06.09.2017**
(21) Application number: 06800170.0
(22) Date of filing: 20.07.2006
(51) Int. Cl.: C08J 9/00, C08J 9/04, C08J 9/06, B60R 13/08, B32B 5/20, B32B 15/08, B32B 15/092, B32B 15/18, B32B 15/10, B32B 27/08, B32B 27/24, B32B 27/38

(54) **THERMALLY EXPANSIBLE MATERIAL**
THERMISCH EXPANDIERBARES MATERIAL
MATÉRIAU THERMO-EXPANSIBLE

(30) Priority: 20.07.2005 US 701112 P
(43) Date of publication of application: 16.04.2008
(73) Proprietor: SIKA TECHNOLOGY AG, CH-6340 Baar (CH)
(72) Inventor: HOEFFLIN, Frank, Royal Oak, MI 48067 (US); ACKERMANN, Herbert, CH-4600 Olten (CH); ENGEL, Paul, Thomas, Rochester, MI 48307 (US); HANLEY, John, L., Sterling Heights, MI 48312 (US); RUDOLF, Jean-claude, CH-6012 Obernau (CH)
(74) Representative: Sika Patent Attorneys
(86) International application number: PCT/US2006/028248
(87) International publication number: WO 2007/012048

(56) References cited:
- EP-A- 0 653 457
- WO-A1-97/43325
- US-A- 6 150 428
- US-B1- 6 319 964

## Description

The present application claims the benefit of the filing date of U.S. Provisional Application Ser. No. 60/701,112, filed July 20, 2005.

### BACKGROUND

Thermally expansible materials have long been used in the automotive industry and in several other industries. Thermally expansible materials are used for sound-deadening (baffling) purposes and for structural reinforcement purposes. For example, certain expansible materials can be molded onto a carrier and placed into an automotive cavity such as a pillar. Then, the expansible materials can be heated to an activation temperature. When the material is activated, it expands. Upon expansion, the material adheres to at least part of the automotive cavity, effectively sealing the cavity. Following expansion, the material is cured. The cured material has a sound-deadening or baffling effect.

Additionally, by way of example, certain expandable materials can provide structural reinforcement to surfaces, including surfaces in automobiles. For example, an expansible material (by itself or together with a carrier) can be disposed on, adjacent or near a substrate such as a plastic surface or a metal surface in an automotive structure such as a frame rail. The material is then heated to an activation temperature. When the material is activated, it expands. Upon expansion, the material adheres to at least a portion of the substrate. Following expansion, the material is cured. The cured material provides structural reinforcement for the substrate. That is, the substrate is less easily bent, twisted or crinkled due to the presence of the cured material.

The Sika Corporation of Madison Heights, Michigan, sells thermally expansible materials under the SIKABAFFLE trade name, which are described in U.S. Pat. Nos. 5,266,133 and 5,373,027. The Sika Corporation also sells thermally expansible reinforcer materials under the trade name SIKAREINFORCER. A series of these thermally expansible reinforcer materials, owned by the Sika Corporation, are described in the U.S. Pat. No. 6,387,470 .

Conventional thermally expansible materials that adhere to a substrate (such as a plastic or a metal) upon expansion include a tackifier, such as rosin or a hydrocarbon resin. Tackifiers have been used to increase the adhesion properties of a cured thermally expansible material. Unfortunately, including tackifiers in thermally expansible materials slows the processing time to prepare the materials, because, among other reasons, the tackifier tends to adhere to the processing equipment. This can make thermally expansible materials substantially more costly to bring to market. Additionally, conventional liquid tackifiers can migrate to the surface of unexpanded expansible material, making the surface of the material undesireably tacky to the touch. Additionally, a group of parts containing a thermally expansible material containing a conventional liquid tackifier, if shipped together, can stick together as a result of such migration. One example of a thermally expansible material is disclosed in US 6 319 964 B1, which shows a method of preparing a heat expandable component comprising blending a grafted anhydride polymer, an epoxide-containing polymer and a blowing agent.

There are certain desirable traits for thermally expansible materials used for baffle purposes. It is favorable for a thermally expansible material, in its uncured state, to be easy to process with existing manufacturing equipment - not sticking to the equipment. It is also favorable for a thermally expansible material, in its uncured state, to have a surface that is substantially tack free. This way, shipped parts that contain the baffle material are less likely to stick together during shipping.

### SUMMARY

A thermally expansible material, substantially free of tackifier, is provided to satisfy one or more of the desired traits for thermally expansible baffle materials. Several embodiments of a expansible material, substantially free of tackifier, are described herein. A thermally expansible material comprises: (a) an epoxy resin; (b) a plurality of thermoplastic polymers, wherein at least one unmodified thermoplastic polymer is included, and wherein at least one modified thermoplastic polymer is included that has at least one chemical moiety capable of reacting with said epoxy resin; (c) a heat-activated blowing agent; the material being substantially free of a tackifier, wherein said material is adhereable to a substrate during expansion.

Surprisingly, it has been found that a synergistic combination of ingredients in a thermally expansible material adequately adheres to substrates for industrial uses, including as baffles within automotive cavities, even though the material is substantially free of a tackifier. In particular, without being bound by theory, it is believed that unreacted epoxy groups on an epoxy resin and unreacted-but-reactive groups on a thermoplastic polymer (such as unreacted MAH groups on MAH-modified EVA), provide a thermally expansible material with the ability to bond to a substrate, especially a metal or a plastic substrate, during expansion.

A suitable thermally expansible material comprises an epoxy resin; a plurality of thermoplastic polymers, wherein at least one unmodified thermoplastic polymer is included, and wherein at least one modified thermoplastic polymer included that has at least one chemical moiety capable of reacting with said epoxy resin; and a heat-activated blowing agent; wherein said thermally expansible material is substantially free of a tackifier. A suitable thermally expansible material may comprise other ingredients such as, without limitation, a humidity stabilizer, an impact modifier, a curative, an accelerator, a filler, a free radical stabilizing system, a surfactant, a thixotropic agent and a colorant. Another suitable thermally expansible material may be substantially free of liquid ingredients during compounding, including liquid plasticizers. Still another suitable thermally expansible material may be substantially free of plasticizers such as phthalates and aromatic oils and mixtures thereof.

### DETAILED DESCRIPTION

### Epoxy Resins

"Epoxy resins" refer to a large range of chemicals containing multiple epoxy groups. Epoxy resins are well-known in the art and are described in the chapter entitled "Epoxy Resins" in the Second Edition of the Encyclopedia of Polymer Science and Engineering, Volume 6, pp. 322-382 (1986). Solid, semi-solid and liquid epoxy resins are suitable for use with the thermally-expansible material. One or more epoxy resins may be used.

Suitable solid epoxy resins are disclosed in U.S. Patent Application Serial No. 11/480,022, filed June 30, 2006. Suitable epoxy resins also include bisphenol-A and all other types of solid, semi-solid and liquid epoxy resins that substantially engage in a cross-linking reaction during expansion. Epoxy resins, especially liquid epoxy resins that do not substantially engage in a cross-linking reaction during expansion (fewer than 20% of the epoxy groups participate in cross-linking) are considered "tackifiers" herein.

Suitable epoxy resins include ARALDITE resins (available from Huntsman Advanced Materials), DER resins (available from The Dow Chemical Co.), and EPON resins (available from Resolution Performance Products).

Suitable epoxy resins have Mettler softening points in the range of from 65°C to 160°C- (more preferably, 70°C to 120°C). Suitable epoxy resins have an average of two epoxy groups per molecule. However, multifunctional epoxy resins (resins with more than 2 epoxides) may be used. Suitable epoxy resins show epoxide equivalent weights in the range of from 350 to 2000 (more preferably, 375 to 1000). Numerous epoxy resins meeting these requirements are available from commercial sources known to those of skill in the art.

Without being bound by theory, the unexpectedly good adhesion properties in the expansible material, even in the substantial absence of a tackifier, may be due, at least in part, to unreacted epoxy groups on the epoxy resin. Thus, it may be useful to have excess unreacted epoxy groups in the expansible material; that is, epoxy groups that are not consumed in the cross-linking reaction. Without being bound by theory, the excess epoxy reacts with electro-deposited primer coatings using similar bisphenol A epoxy chemistry as well as polar and/or polymeric substrates to provide robust adhesion.

In a suitable thermally expansible material, an epoxy resin or combination of epoxy resins may be present, by weight percent, from 0.5% to 20.0% (more preferably, 2% to 12% or from 2% to 8%). Unless otherwise stated, all percentages are weight percentages where 100% is the weight of the thermally expansible material.

### Thermoplastic Polymers

"Thermoplastic polymers" are well known in the art as polymers that soften when heated and harden when cooled. Generally, thermoplastic polymers can go through multiple heating/cooling cycles without significant chemical change, making them ideal for injection molding or thermoforming. In a suitable thermally expansible material, at least one modified or "activated" thermoplastic polymer is included, and at least one unmodified thermoplastic polymer is included.

A modified or "activated" thermoplastic polymer has one or more reactive chemical moieties, at least one of which is repeating, that is capable of reacting with epoxy groups in the epoxy resin. Such activated thermoplastic polymers include polymers having the reactive chemical moieties as part of a backbone of a polymer or grafted onto a polymer as a side chain. Additionally, activated thermoplastic polymers may be created during a compounding process by grafting a desired reactive chemical moiety or moieties onto a selected thermoplastic polymer during compounding. Any reactive chemical moiety or moieties that react with epoxy groups may be used. Suitable reactive chemical moieties include anhydrides, especially maleic anhydride.

Suitable activated thermoplastic polymers are anhydride-modified terpolymers. Anhydride-modified thermoplastic polymers may contain either grafted or polymerized anhydride functionality. Activated polymers include but are not limited to anhydride-modified ethylene vinyl acetate polymer and anhydride, ethylene, acrylic ester terpolymers. Suitable activated polymers include but are not limited to polymers that are commercially available as BYNEL or FUSABOND (DuPont) and Lotader (Arkema) products.

A suitable terpolymer is an ethylene acrylic ester terpolymer. Suitable activated ethylene acrylic ester terpolymers have a reactivity, crystallinity and fluidity making them easy to use and readily compatible with other polymers and additives. Suitable ethylene acrylic ester terpolymers have thermal stability with limited viscosity change and discoloration, especially when formulated with an antioxidant. Suitable ethylene acrylic ester terpolymers can react with other functional polymers to create chemical bonds that can increase adhesion properties in a suitable thermally expansible material, heat resistance or long-term aging properties.

The properties of ethylene acrylic ester terpolymers vary according to their constituent monomers. A first monomer is ethylene. A second monomer is an acrylic ester, preferably methyl, ethyl, or particularly preferably, butyl. Without being bound by theory, the second monomer comprising acrylic ester decreases the crystallinity of the terpolymer and helps retain mechanical properties. A third monomer is the reactive chemical moiety. The third monomer is preferably an acid anhydride such as maleic anhydride, but may also be another reactive chemical moiety such as, without limitation, glycidyl methacrylate. Without being bound by theory, the third monomer comprising anhydride increases adhesion to polar substrates and allows the creation of chemical bonds onto substrates such as polar substrates, metal, polymers or electro-deposited primer coatings.

Without being bound by theory, the increase in final adhesion properties is believed to result, at least in part, from unreacted groups on the third monomer, especially if the third monomer is an anhydride such as maleic anhydride. The unexpected adhesion in the substantial absence of a tackifier may be due, at least in part, to unreacted anhydride groups on the thermoplastic polymer. Thus, it may be useful to have unreacted anhydride groups; that is, anhydride groups that are not consumed in the cross-linking reaction. Surplus anhydride is available by adjusting the ratio of anhydride to epoxy, preferred epoxy:anhydride ratios are between 5:1 and 1:100 (more preferably, between 1:3 and 1:90).

Suitable ethylene acrylic ester terpolymers have a content of 9% by weight to 28% by weight of acrylic ester where 100% is the weight of the terpolymer. Suitable ethylene acrylic ester terpolymers have a low to middle content of acid anhydride, especially maleic anhydride. Suitable ethylene acrylic ester terpolymers have a melt flow index from 2g/10mn to 200g/10mn (190°C - 2.16 kg). A suitable activated thermoplastic polymer may contain by weight percent 0.1 % to 10% chemical moiety (more preferably 0.1 % to 4% moiety). In a suitable thermally expansible material, an activated thermoplastic polymer or combination of activated thermoplastic polymer may be present, by weight percent, from 5% to 50% (more preferably, 10% to 40% or from 15% to 20%), where 100% is the weight of the thermally expansible material.

A suitable thermally expansible material includes an unmodified thermoplastic polymer that is not activated with an anhydride. Any thermoplastic polymer known in the art may be used, including without limitation, ethylene copolymers, polyethylene, and polypropylene. Ethylene copolymers are suitable, especially ethylene vinyl acetate. Ethylene vinyl acetate polymers are highly flexible polymers, compatible with many other polymers and additives, and are easy to process. Suitable grades of ethylene vinyl acetate include but are not limited to the Elvax product line from DuPont and in the Evatane product line from Arkema.

Without being bound by theory, it is believed that ethylene vinyl acetate polymers are highly flexible, deliver cohesive strength and compatibility, ensure adequate adhesion to a wide range of substrates, and are highly resistant to rupture. Indeed, without being bound by theory, the presence of ethylene vinyl acetate in the preferred embodiment may contribute to its adhesive properties, even in the substantial absence of a tackifier.

Ethylene vinyl acetate copolymers are useful, for they are compatible with a large array of polyethylene waxes, and modified waxes. Ethylene vinyl acetate polymers may be formulated with one or more antioxidants, heat stabilizers or UV stabilizers.

A suitable ethylene vinyl acetate has a melt flow index from 3 g/10mn to 800 g/10mn (190°C - 2.16 kg). In a suitable thermally expansible material, one or more unmodified thermoplastic polymers may be present, by weight percent, from 20% to 85% (more preferably, 40% to 75%), where 100% is the weight of the thermally expansible material.

A suitable thermally expansible material contains at least one activated thermoplastic polymer and at least one unmodified thermoplastic polymer. In a suitable thermally expansible material, a combination of thermoplastic polymers may be present, by weight percent, from 30% to 90% (more preferably, 50% to 80% or from 60% to 75%), where 100% is the weight of the thermally expansible material.

### Humidity Stabilizing System

A suitable thermally expansible material comprises at least humidity stabilizer. A humidity stabilizer prevents the thermally expansible material, when exposed to humidity in its uncured state, from losing a substantial amount of its ability to expand. Any known humidity stabilizer may be used. A suitable humidity stabilizer is wax, more preferably a polyethylene wax or a microcrystalline wax or a paraffin wax.

Without being bound by theory the hydrophobic properties of the wax help protect the thermally expansible material from exposure to water. Although wax is used as a humidity stabilizer, the wax also functions as a solid plasticizer.

In a suitable thermally expansible material, one or more stabilizer may be also present for humidity stabilization, by weight percent, from 0% to 20% (more preferably, 5% to 15% or from 5% to 10%), where 100% is the weight of the thermally expansible material.

### Heat-Activated Blowing Agents

A "heat-activated blowing agent," sometimes referred to by those of skill in the art as a "foaming agent," is a physical agent or chemical agent that causes its host to expand by a pre-determined amount upon the application of a pre-determined amount of heat. Exemplary heat-activated foaming agents are described as blowing agents in U.S. Pat. No. 6,451,876 .

Any known heat-activated physical blowing agent may be used in a thermally expansible material. Suitable physical heat-activated blowing agents include, without limitation, spherical plastic particles that encapsulate a low molecular weight hydrocarbon like isobutene or isopentane. When heated to the boiling points of the particular hydrocarbon, the microspheres can expand more than 40 times in volume.

Any known heat-activated chemical blowing agent may be used in a thermally expansible material. Suitable preferred chemical heat-activated blowing agents include azodicarbonamide and its modified compounds, p,p'-oxybis(benzenesulfonyl hydrazide), benzenesulfonyl hydrazide, dinitrosopentamethylene tetramine, p-toluenesulfonyl semicarbazide, 5-phenyltetrazole.

Heat activation may result from either the external application of heat, or internal activation resulting from the release of heat in an exothermic reaction. In one embodiment, the temperature at which the expansion is activated is at least about 170°C, more preferably at least 140°C. In one embodiment, the desired expansion must be sustained at an exposure of 45 minutes to preferably 190°C, and more preferably at 210°C. The amount of expansion can be adjusted, by the addition or subtraction of blowing agent, from 0% to 2500%. A blowing agent may be fine-tuned by the addition or subtraction of certain other ingredients, especially catalysts, to adjust the range of temperatures at which a blowing agent will be activated.

In a thermally expansible material, a heat-activated blowing agent or combination of heat-activated blowing agents may be present, by weight percent, from 1% to 15% (more preferably, 1% to 10%), where 100% is the weight of the thermally expansible material. In a thermally expansible material, a heat-activated blowing agent or combination of heat-activated blowing agents cause expansion from its original pre-activation state by 10% to 2500% (more preferably, by 500% to 2000%).

### Fillers

A thermally expansible material may optionally contain one or more fillers. More than one filler may be used. U.S. Pat. No. 6,562,884 describes known fillers.

Suitable fillers include fibrous fillers, spherical fillers, plate-like fillers, and nanoparticle fillers. Fibrous fillers can be inorganic, such as glass fiber or wollastonite fiber, or in the alternative, can be natural or organic. Natural or organic fillers include, without limitation, carbon fiber, aramid fiber, cellulosic fibers, jute or hemp. Spherical fillers can be organic or inorganic. Without limitation, organic spherical fillers can be polymeric spheres, and inorganic spherical fillers can be glass microballons, ceramic microspheres, fumed silica (organically modified or unmodified) or pyrogenic silica (organically modified or unmodified). Plate-like fillers are preferably inorganic, such as graphite, talc, mica, and other materials known to those of skill in the art. Nanoparticle fillers can include, without limitation, nanoclays, nanosilica (preferably with reactive groups), and carbon nanotube, hybrid organic-inorganic copolymers-polyhedral-oligomeric silsesquioxanes (POSS).

Other fillers known in the thermosettable resin art may be used including, for example, calcium carbonate (including coated and/or precipitated calcium carbonate), ceramic fibers, calcium oxide, alumina, clays, sand, metals (for example, aluminum powder), glass or ceramic microspheres, thermoplastic resins, thermoset resins, and carbon (all of which may be solid or hollow, expanded or expandable).

Fillers can be conical in shape or plate-like. Suitable platelet sizes can range from 1 to 10 mm in length, and 5 to 10 microns in width. In one embodiment, a filler comprises a mixture of fibers having different shapes and sizes. Such a mixture has improved packing density, which results in improved impact resistance at low temperatures, such as temperatures ranging from -40°C to -5°C.

In a thermally expansible material, a filler or combination of fillers may be present, by weight percent, from 0% to 30% (more preferably, 0% to 15%, still more preferably from 0% -to 7.5%), where 100% is the weight of the thermally expansible material.

### Impact Modifiers

A thermally expansible material may optionally contain an "impact modifier," also known as a "toughener," which refers to any material that is added to a formulation to improve the impact resistance of the formulation. Many commercially available impact modifiers are known in the art and are suitable for use in a thermally expansible material. One suitable impact modifier is styrene butadiene rubber. A natural or synthetic elastomer may be included in a thermally expansible material. Without being bound by theory, an impact modifier may impart flexibility upon a preferred thermally expansible material and modify melt behavior of same. Suitable impact modifiers include, without limitation, standard rubbers (SBR, EPDM, etc.); pre-cross-linked rubbers, thermoplastic elastomers / block polymers, ionomeric thermoplastic elastomers, and modified thermoplastic polymers.

In a thermally expansible material, an impact modifier or combination of impact modifiers may be present, by weight percent, from 0% to 20% (more preferably, 0% to 10%, still more preferably from 0% -to 5%), where 100% is the weight of the thermally expansible material.

### Curatives

A thermally expansible material may optionally contain a curative, which is a chemical composition that cross-links the polymer components of a thermally expansible material. Those of skill in the art also refer to such chemicals as curing agents, hardeners, activators, catalysts or accelerators. While certain curatives promote curing by catalytic action, others participate directly in the reaction of the solid epoxy resin and are incorporated into the thermoset polymeric network formed by a ring-opening reaction, ionic polymerization, and/or crosslinking of the resin. Many commercially available curatives known to those of skill in the art are described in the chapter in the Encyclopedia of Polymer and Engineering referenced above. Several curatives are described as "curing agents" in the above-referenced U.S. Pat. No. 6,562,884.

A suitable curative is solid at room temperature, and remains latent up to 140°C. More than one curative may be used. Suitable curatives include dicyandiamide; aromatic diamines including without limitation 3,3'-diaminodiphenylsulfone, 4,4'-diaminodiphenylsulfone, and blends thereof; imidazoles; multifunctional solid anhydrides/acids; and phenols, including mononuclear phenols, such as resorcinol, hydroquinone and N,N-bis(2-hydroxyethyl)aniline, or polynuclear phenols, such as p,p'-bis(2-hydroxyethylamino)diphenylmethane.

Other suitable curatives include amino compounds, amine salts, and quaternary ammonium compounds, amine-epoxy adducts, boron trihalide amine adducts, ureas, and guanidines. Suitable boron trihalide adducts include boron trichloride adducts of amines such as monoethanolamine, diethylamine, dioctylmethylamine, triethylamine, pyridine, benzylamine or benzyldimethyl amine.

In a thermally expansible material, a curative or combination of curatives may be present, by weight percent, from 0% to 3% (more preferably, 0% to 1.5%), where 100% is the weight of the thermally expansible material.

### Accelerators

A thermally expansible material may optionally contain an "accelerator" to either quicken the cure speed or lower the cure temperature of a thermally expansible material. Those of skill in the art sometimes use this term interchangeably with "hardeners" and "curatives," as described above. Accelerators include any available epoxy-anhydride reaction accelerators. Suitable accelerators include amino compounds, primary-secondary-tertiary amines, amine salts, metal salts, organometallic salts, and metal oxides.

Other suitable accelerators include, without limitation, substituted ureas, phenols, and imidazoles. Exemplary ureas include phenyl dimethyl urea, 4-chlorophenyl dimethyl urea, 2,4-toluene bis(dimethyl urea), 4,4'-methylene bis(phenyl dimethyl urea) or cycloaliphatic bisurea. Exemplary imidazoles include 2-methyl imidazole, 2-phenyl imidazole, 2-phenyl 4-methyl imidazole or 2-heptadecyl imidazole.

In a thermally expansible material, an accelerator or combination of accelerators may be present, by weight percent, from 0% to 2.5 % (more preferably, 0% to 1%), where 100% is the weight of the thermally expansible material.

### Free Radical Stabilizing System

A thermally expansible material comprises at least one stabilizer to form a stabilizing system. Preferably, at least part of the stabilizing system manages free radicals to prevent unwanted reactions.

Any known antioxidant may be used as part of a stabilizing system for managing free radicals. A suitable antioxidant is a sterically hindered phenolic antioxidant such as pentaerythritol tetrakis (3-(3,5-di-tert-butyl-4-hydroxyphenyl)propionate).

In one embodiment, a heat stabilizer is included in the stabilizing system for managing free radicals. Any known heat stabilizer may be used. A suitable heat stabilizer is diodecyl 3,3'-thiodipropionate.

In one embodiment, an acid scavenger processing stabilizer is included in the stabilizing system for managing free radicals. Any known acid scavenger processing stabilizer may be used. A suitable acid scavenger processing stabilizer is a magnesium-aluminum-hydroxy-carbonate hydrate.

In one embodiment, a phosphonite processing stabilizer is included in the stabilizing system for managing free radicals. Any known phosphonite processing stabilizer may be used. A suitable phosphonite processing stabilizer is a tris(2,4-ditert-butylphenyl)phosphite.

In a thermally expansible material, one or more stabilizer may be present for management of free radicals, by weight percent, from 0% to 2% (more preferably, 0% to 1%), where 100% is the weight of the thermally expansible material.

### Surfactants

A thermally expansible material may optionally contain a surfactant, also known as a surface active agent or a wetting agent. A surfactant can be classified by electronic characteristics. A nonionic surfactant has no charge groups. An ionic surfactant carries a net charge. If the charge is negative, the surfactant is more specifically called anionic; if the charge is positive, the surfactant is called cationic. If a surfactant contains a head with two oppositely charged groups, it is termed zwitterionic.

Common anionic surfactants include sodium dodecyl sulfate (SDS) and other alkyl sulfate salts. Common cationic surfactants include cetyl trimethylammonium bromide (CTAB) and other alkyltrimethylammonium salts, cetyl pyridinium chloride or polyethoxylated tallow amine (POEA). Common nonionic surfactants include alkyl poly(ethylene oxide), and alkyl polyglucosides, including without limitation octyl glucoside and decyl maltoside. Common zwitterionic surfactants include without limitation dodecyl betaine and dodecyl dimethylamine oxide.

In a thermally expansible material, a surfactant or combination of surfactants may be present, by weight percent, from 0% to 1% (more preferably, 0% to 0.5%, still more preferably from 0% -to 0.25%), where 100% is the weight of the thermally expansible material.

### Thixotropic Agents

A thermally expansible material may optionally contain a "thixotropic agent" to bring thixotropy to an end product. "Thixotropy" refers to a property of certain materials to soften upon agitation, and to return to its original state when allowed to rest. Thixotropic agents help prevent and reduce sag at the temperature of the final composition following thermal expansion.

Suitable thixotropic agents include unmodified or hydrophobically modified fumed silica and precipitated silica. Other suitable thixotropic agents include organically modified clays such as bentonite, laponite or montmorillonite. Other thixotropic agents are known to those of skill in the art, such as coated precipitated calcium carbonate and polyamide waxes are suitable for use in a preferred thermally expansible material, whether organic or inorganic. Also suitable thixotropic agents include urea derivatives, which can be made, without limitation, by reacting butylamine with MDI, and used as a dispersion in a non-migrating reactive liquid rubber. Some materials identified as fillers above also have thixotropic effects, such as platelet fillers and fiber fillers.

In a thermally expansible material, a thixotropic agent or combination of thixotropic agents may be present, by weight percent, from 0% to 10% (more preferably, 0% to 5%, still more preferably from 0% to 2.5%), where 100% is the weight of the thermally expansible material.

### Other Additives

A thermally expansible material may also be include other additives such as colorants, plasticizers, and other common ingredients, each of which is commercially available and well known in the art.

In one embodiment, the thermally expansible material is substantially free of plasticizers (exclusive of wax which can act as a solid plasticizer). In other words, in this embodiment, the material may contain wax but not contain more than 2% by weight of polar or non-polar plasticizers, including phthalates (such as DEHP), aliphatic oils, aromatic oils, naphtenic oils, esters (such as sebacates, adipates or azelates glutarates) or phosphates (such as trioctylphosphate).

In one embodiment, the thermally expansible material is substantially free of liquid components at standard temperature and pressure (STP). In this embodiment, a liquid epoxy resin is not used, nor is a liquid plasticizer. At STP, no more than 2% by weight of any component or combination of components is liquid. Without being bound by theory, it is believed that this substantially prevents migration of tack-causing ingredients to an exterior surface of the material, which could cause the surface to be tacky.

In a thermally expansible material, other additives may be present, by weight percent, from 0 % to 2% (more preferably, 0% to 1%, still more preferably 0% to 0.5%), where 100% is the weight of the thermally expansible material.

### Substantially Free of Tackifier

In a thermally expansible material, tackifier is not added to the formulation. In particular, a thermally expansible material is substantially free of tackifier, meaning no more than 2% is present in the formulation, preferably no more than 0%, and most preferably, no tackifier at all is present, where 100% is the weight of the thermally expansible material.

The term "tackifier" is meant to encompass conventional hydrocarbon tackifying resins. Tackifiers also encompass natural and modified rosin such as, for example, gum rosin, wood rosin, tall-oil rosin, distilled rosin, hydrogenated rosin, dimerized rosin and polymerized rosin; glycerol and pentaerythritol esters of natural and modified rosins, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall oil rosin and the phenolic modified pentaeiythritol ester of rosin; polyterpene resins having a softening point, as determined by ASTM method E28-58T, of from 60°C to 140°C the latter polyterpene resins generally resulting from the polymerization of terpene hydrocarbons, such as the monoterpene known as pinene, in the presence of Friedel-Crafts catalysts at moderately low temperatures; also included are the hydrogenated polyterpene resins; copolymers and terpolymers of natural terpenes, such as styrene/terpene, alpha-methyl styrene/terpene and vinyl toluene/terpene; phenolic-modified terpene resins such as, for example, the resin product resulting from the condensation, in an acidic medium, of a terpene and a phenol; aliphatic petroleum hydrocarbon resins having Ring and Ball softening points of from 600°C to 140°C, the latter resins resulting from the polymerization of monomers consisting primarily of olefins and diolefins; also included are the hydrogenated aliphatic petroleum hydrocarbon resins; examples of such commercially available resins based on a C₅-olefin fraction of this type are "Wingtack 95" and "Wingtack 115" tackifying resins sold by Sartomer Company; aromatic petroleum hydrocarbons and the hydrogenated derivatives thereof; and aliphatic/aromatic petroleum derived hydrocarbons and the hydrogenated derivatives thereof.

Tackifiers can also include certain epoxy resins. In particular, tackifiers (especially liquid tackifiers at STP) include epoxy resins that do not substantially participate in the cross-linking reaction that occurs during expansion. This means that less than 20% of the epoxy groups on the epoxy resin participate in the cross linking reaction for a tackifying epoxy resin. This range of tackifying epoxy resins also includes epoxy resins where less than 10% of the epoxy resin groups participate in cross-linking, where less than 5% participate, and where less than 1% participate.

Table 1 provides a general guideline on percentage ranges of ingredients that may be used to formulate embodiments of the below-claimed thermally expansible material, where 100% is the weight of the thermally expansible material.

**Table 1**

| **Category of Ingredient** | **Preferred wt % range** | **Particularly preferred wt % range** | **Most preferred wt % range** |
|---|---|---|---|
| Epoxy resin | 0.5% - 20% | 2% - 12% | 2% - 8% |
| Activated Thermoplastic Polymer | 5% - 50% | 10% - 40% | 15% - 20% |
| Unmodified Thermoplastic Polymer | 20% - 85% | 40% - 75% | 60% - 75% |
| Stabilizing System For Humidity Stability | 0% - 20% | 5% - 15% | 5% - 10% |
| Blowing Agent Package | 1% - 15% | 1% - 10% | 1% - 10% |
| Filler | 0% - 30% | 0% - 15% | 0% - 7.5% |
| Impact Modifier | 0% - 20% | 0% - 10% | 0% - 5% |
| Curative | 0% - 3% | 0% - 1.5% | 0% - 1.5% |
| Accelerator | 0% - 2.5% | 0% - 1% | 0% - 1% |
| Stabilizing System For Free Radical Management | 0% - 2% | 0% - 1% | 0% - 1% |
| Surfactant | 0% - 1% | 0% - 0.25% | 0% - 0.25% |
| Thixotropic Agent | 0% - 10% | 0% - 5% | 0% - 2.5% |
| Tackifier | 0% - 2% | 0% | 0% |

Samples of thermally expansible materials that were substantially free of tackifier was formulated according to guidelines set forth in column 3 of Table 1. It is to be clearly understood that resort may be had to various other embodiments, modifications, and equivalents thereof which, after reading the description herein, may suggest themselves to those skilled in the art without departing from the spirit of the present invention .

A thermally expansible material can be used in a cavity in a structure where quietness is desired, such as in an automotive structure. One, non-limiting method of using a thermally expansible material this way is to injection mold (or otherwise affix or secure or introduce) the thermally expansible material to a carrier, and place the carrier into a cavity in an automotive structure. A carrier is not necessary; a thermally expansible material can otherwise be placed in or secured within a cavity before being heated to an activation temperature. In this non-limiting example, when the automobile is heated to an activation temperature, for example during a paint bake, the material can expand and substantially adhere to the substrate from which the cavity is formed, effectively sealing the cavity and thereby providing a baffling effect.

The thermally expansible material, during and/or following expansion, adheres to a substrate. In one embodiment, the substrate comprises metal, including but not limited to cold rolled steel, galvanized steel or galvanized electro-coated steel. In another embodiment, the expanded material is bonded with both the e-coat and the underlying metal. In another embodiment, the substrate comprises plastic and/or plastic coated with another material.

### EXAMPLES

The following examples were prepared by mixing the ingredients in a blender, then compounding same in a twin screw extruder with a pelletizer. All percentages of ingredients are weight percents.

**Table 2: Example Formulations**

| **Ingredient** | **Example #1** | **Example #2** |
|---|---|---|
| Solid epoxy resin | 4.00% | 5.00% |
| Activated Thermoplastic Polymer #1 (ethylene-BA - MAH terpolymer) (6% ester content by weight) | 6.25% | 8.35% |
| Activated Thermoplastic Polymer #2 (ethylene-BA-MAH terpolymer) (18% ester content by weight) | 11.25% | 6.25% |
| Unmodified Thermoplastic Polymer (EVA) | 60.30% | 55.65% |
| Stabilizing System For Free Radical Management (antioxidant package) | 0.00% | 0.75% |
| Stabilizing System For Humidity Stability (polyethylene wax) | 10.00% | 13.00% |
| Blowing Agent Package (including azodicarbonamide) | 8.00% | 6.00% |
| Accelerator (m-tolyl diethanol amine) | 0.20% | 0.00% |
| Impact Modifier (SBR) | 0.00% | 5.00% |
| Tackifier | 0.00% | 0.00% |

**Table 3: Properties of Example**

| **Property** | **Example #1** | **Example #2** |
|---|---|---|
| Specific Gravity (g/cm³) | 0.98 | 0.98 |
| Volume Expansion (%) | 1667% | 1140% |
| Adhesion to Cold Rolled Steel (% Cohesive Failure) | 100% | 100% |
| Adhesion to Galvanized Steel (% Cohesive Failure) | 100% | 100% |
| Adhesion to Galvanized, Electro-Coated Steel (% Cohesive Failure) | 100% | 100% |

| | | |
|---|---|---|
| * Data taken after heating to 170°C for 30 min, cooling to room temperature, and reheating to 140°C for 30 min. | | |

The term "cohesive failure" above means that, after pulling the foam from the substrate by hand, 100% of the surface area of the foam in contact with the substrate left a residue. This means the adhesive bond of the example to the substrate was stronger than the internal strength of the example material following expansion.

Those skilled in the art will recognize that the present invention is capable of many modifications and variations. Accordingly, the detailed description and examples set forth above are meant to be illustrative only.

## Claims

1. A thermally expansible material comprising:
(a) an epoxy resin;
(b) a plurality of thermoplastic polymers, wherein at least one unmodified thermoplastic polymer is included, and wherein at least one modified thermoplastic polymer is included that has at least one chemical moiety capable of reacting with said epoxy resin; and
(c) a heat-activated blowing agent; the material being substantially free of a tackifier, wherein said material is adhereable to a substrate during expansion, and wherein the reactive chemical moiety includes an anhydride and the ratio of epoxy on the epoxy resin to anhydride on the thermoplastic polymer is between 5:1 and 1:100.

2. The material of claim 1 wherein the ratio of epoxy on the epoxy resin to anhydride on the thermoplastic polymer is 1:3 and 1:90.

3. The material of claim 1 wherein the epoxy resin is a solid epoxy resin.

4. The material of claim 1 wherein the epoxy resin comprises from 0.5% to 20% by weight of the material.

5. The material of claim 1 wherein the at least one thermoplastic polymer capable of reacting with said epoxy resin comprises from 5% to 50% by weight of the material.

6. The material of claim 1 wherein the material is substantially free of liquid components at standard temperature and pressure.

7. The material of claim 1 wherein the material is substantially free of plasticizers.

8. A thermally expansible baffle material comprising:
(a) from 2% to 8% solid epoxy resin;
(b) from 15% to 20% of at least one anhydride-modified thermoplastic polymer;
(c) from 60% to 750% of an unmodified thermoplastic polymer;
(d) from 5% to 10% wax; and
(e) from 1% to 10% heat-activated blowing agent; the material being substantially free of a tackifier, wherein said material is adhereable to a substrate during expansion, and wherein the ratio of epoxy on the epoxy resin to anhydride on the thermoplastic polymer is between 5:1 and 1:100.

9. The material of claim 8 wherein the ratio of epoxy on the epoxy resin to anhydride on the thermoplastic polymer is 1:3 and 1:90.

10. The material of claim 8 wherein the material is thermally expandable by from 10% to 2500% of an unexpanded volume of the thermally expansible material, preferably from 500% to 2000% of an unexpanded volume of the thermally expansible material.

11. The material of claim 8 wherein the material is substantially free of liquid components at standard temperature and pressure.

12. The material of claim 8 wherein the material is substantially free of plasticizers selected from the group consisting of phthalates and aromatic oils and mixtures thereof.

13. A thermally expanded baffle material comprising:
(a) an epoxy resin;
(b) a plurality of thermoplastic polymers, wherein at least one unmodified thermoplastic polymer is included, and wherein at least one modified thermoplastic polymer is included that has at least one chemical moiety capable of reacting with said epoxy resin; and
(c) a heat-activated blowing agent; the material being substantially free of a tackifier, wherein said material is adhered to a substrate, and wherein the reactive chemical moiety includes an anhydride and the ratio of epoxy on the epoxy resin to anhydride on the thermoplastic polymer is between 5:1 and 1:100.

14. The material of claim 17 wherein the ratio of epoxy on the epoxy resin to anhydride on the thermoplastic polymer is 1:3 and 1:90.

15. The material of claim 17 wherein the substrate comprises metal or plastic.

## Patentansprüche

1. Thermisch expandierbares Material, umfassend:
(a) ein Epoxyharz;
(b) eine Mehrzahl thermoplastischer Polymere, wobei mindestens ein thermoplastisches Polymer einen unmodifizierten Thermoplast aufweist, und wobei mindestens ein modifiziertes thermoplastisches Polymer mindestens eine chemische Einheit aufweist, die mit dem Epoxyharz reagieren kann; und
(c) ein wärmeaktiviertes Treibmittel; wobei das Material im Wesentlichen frei von einem Klebrigmacher ist, wobei das Material während der Ausdehnung an ein Substrat geklebt werden kann und wobei die reaktive chemische Einheit ein Anhydrid aufweist und das Verhältnis zwischen Epoxy auf dem Epoxyharz und Anhydrid auf dem thermoplastischen Polymer zwischen 5:1 und 1:100 beträgt.

2. Material nach Anspruch 1, wobei das Verhältnis zwischen Epoxy auf dem Epoxyharz und Anhydrid auf dem thermoplastischen Polymer 1:3 und 1:90 ist.

3. Material nach Anspruch 1, wobei das Epoxyharz ein festes Epoxyharz ist.

4. Material nach Anspruch 1, wobei das Epoxyharz etwa 0,5 Gew.-% bis etwa 20 Gew.-% des Materials umfasst.

5. Material nach Anspruch 1, wobei das mindestens eine thermoplastische Polymer, das mit dem Epoxyharz reagieren kann, von etwa 5 Gew.-% bis etwa 50 Gew.-% des Materials umfasst.

6. Material nach Anspruch 1, wobei das Material im Wesentlichen frei von Flüssigkeitskomponenten bei Standardtemperatur und -druck ist.

7. Material nach Anspruch 1, wobei das Material im Wesentlichen frei von Weichmachern ist.

8. Thermisch expandierbares Leitblechmaterial, umfassend:
(a) von etwa 2% bis etwa 8% festes Epoxyharz;
(b) von etwa 15% bis etwa 20% mindestens eines anhydridmodifizierten thermoplastischen Polymers;
(c) von etwa 60% bis etwa 750% eines unmodifizierten thermoplastischen Polymers;
(d) von etwa 5% bis etwa 10% Wachs; und
(e) von etwa 1% bis etwa 10% eines wärmeaktivierten Treibmittels; wobei das Material im Wesentlichen frei von einem Klebrigmacher ist, wobei das Material während der Ausdehnung an ein Substrat geklebt werden kann und wobei das Verhältnis zwischen Epoxy auf dem Epoxyharz und Anhydrid auf dem thermoplastischen Polymer zwischen 5:1 und 1:100 beträgt.

9. Material nach Anspruch 8, wobei das Verhältnis zwischen Epoxy auf dem Epoxyharz und Anhydrid auf dem thermoplastischen Polymer 1:3 und 1:90 ist.

10. Material nach Anspruch 8, wobei das Material von etwa 10% bis etwa 2500% eines nicht expandierten Volumens des thermisch expandierbaren Materials thermisch expandierbar ist, vorzugsweise von etwa 500% bis etwa 2000% eines nicht expandierten Volumens des thermisch expandierbaren Materials.

11. Material nach Anspruch 8, wobei das Material im Wesentlichen frei von Flüssigkeitskomponenten bei Standardtemperatur und -druck ist.

12. Material nach Anspruch 8, wobei das Material im Wesentlichen frei von Weichmachern ist, die ausgewählt sind aus der Gruppe, bestehend aus Phthalaten und aromatischen Ölen und Mischungen davon.

13. Thermisch expandiertes Leitblechmaterial, umfassend:
(a) ein Epoxyharz;
(b) eine Mehrzahl thermoplastischer Polymere, wobei mindestens ein thermoplastisches Polymer einen unmodifizierten Thermoplast aufweist, und wobei mindestens ein modifiziertes thermoplastisches Polymer mindestens eine chemische Einheit aufweist, die mit dem Epoxyharz reagieren kann; und
(c) ein wärmeaktiviertes Treibmittel; wobei das Material im Wesentlichen frei von einem Klebrigmacher ist, wobei das Material an ein Substrat klebt und wobei die reaktive chemische Einheit ein Anhydrid aufweist und das Verhältnis zwischen Epoxy auf dem Epoxyharz und Anhydrid auf dem thermoplastischen Polymer zwischen 5:1 und 1:100 beträgt.

14. Material nach Anspruch 17, wobei das Verhältnis zwischen Epoxy auf dem Epoxyharz und Anhydrid auf dem thermoplastischen Polymer 1:3 und 1:90 ist.

15. Material nach Anspruch 17, wobei das Substrat Metall oder Kunststoff umfasst.

## Revendications

1. Matériau thermo-expansible comprenant :
(a) une résine époxyde ;
(b) une pluralité de polymères thermoplastiques, au moins un polymère thermoplastique contenant un thermoplastique non modifié, au moins un polymère thermoplastique contenant au moins une fraction chimique capable de réagir avec ladite résine époxyde ; et
(c) un agent gonflant activé par la chaleur ; le matériau étant essentiellement exempt d'agent collant, ledit matériau étant capable d'adhérer à un substrat durant l'expansion, et la fraction chimique réactive contenant un anhydride et le rapport de l'époxyde sur la résine époxyde contre l'anhydride sur le polymère thermoplastique étant de 5:1 à 1:100.

2. Matériau selon la revendication 1, dans lequel le rapport de l'époxyde sur la résine époxyde contre l'anhydride sur le polymère thermoplastique est 1:3 et 1:90.

3. Matériau selon la revendication 1, dans lequel la résine époxyde est une résine époxyde solide.

4. Matériau selon la revendication 1, dans lequel la résine époxyde représente d'environ 0,5 % à environ 20 % du poids du matériau.

5. Matériau selon la revendication 1, dans lequel ledit au moins un polymère thermoplastique capable de réagir avec ladite résine époxyde représente d'environ 5 % à environ 50 % du poids du matériau.

6. Matériau selon la revendication 1, le matériau étant essentiellement exempt de constituants liquides à une température et à une pression normales.

7. Matériau selon la revendication 1, le matériau étant essentiellement exempt de plastifiants.

8. Matériau thermo-expansible pour écran acoustique comprenant :
(a) d'environ 2 % à environ 8 % de résine époxyde solide ;
(b) d'environ 15 % à environ 20 % d'au moins un polymère thermoplastique modifié par un anhydride ;
(c) d'environ 60 % à environ 750 % d'un polymère thermoplastique non modifié ;
(d) d'environ 5 % à environ 10 % d'une cire ; et
(e) d'environ 1 % à environ 10 % d'un agent gonflant activé par la chaleur ; le matériau étant essentiellement exempt d'agent collant, ledit matériau étant capable d'adhérer à un substrat durant l'expansion, et le rapport de l'époxyde sur la résine époxyde contre l'anhydride sur le polymère thermoplastique étant de 5:1 à 1:100.

9. Matériau selon la revendication 8, dans lequel le rapport de l'époxyde sur la résine époxyde contre l'anhydride sur le polymère thermoplastique est 1:3 et 1:90.

10. Matériau selon la revendication 8, le matériau étant thermo-expansible d'environ 10 % à environ 2 500 % d'un volume du matériau thermo-expansible non expansé, préférablement d'environ 500 % à environ 2 000 % d'un volume du matériau thermo-expansible non expansé.

11. Matériau selon la revendication 8, le matériau étant essentiellement exempt de constituants liquides à une température et à une pression normales.

12. Matériau selon la revendication 8, le matériau étant essentiellement exempt de plastifiants sélectionnés dans le groupe constitué des phtalates et des huiles aromatiques et de mélanges de ceux-ci.

13. Matériau pour écran acoustique thermo-expansé comprenant :
(a) une résine époxyde ;
(b) une pluralité de polymères thermoplastiques, au moins un polymère thermoplastique contenant un thermoplastique non modifié, au moins un polymère thermoplastique contenant au moins une fraction chimique capable de réagir avec ladite résine époxyde ; et
(c) un agent gonflant activé par la chaleur ; le matériau étant essentiellement exempt d'agent collant, ledit matériau adhérant à un substrat, et la fraction chimique réactive contenant un anhydride et le rapport de l'époxyde sur la résine époxyde contre l'anhydride sur le polymère thermoplastique étant de 5:1 à 1:100.

14. Matériau selon la revendication 17, dans lequel le rapport de l'époxyde sur la résine époxyde contre l'anhydride sur le polymère thermoplastique est 1:3 et 1:90.

15. Matériau selon la revendication 17, dans lequel le substrat comprend un métal ou une matière plastique.
